# EUROPÄISCHE PATENTSCHRIFT

(11) **EP 2 895 764 B1**
(45) Veröffentlichungstag und Bekanntmachung des Hinweises auf die Patenterteilung: **14.11.2018**
(21) Anmeldenummer: 13762497.9
(22) Anmeldetag: 16.09.2013
(51) Int. Cl.: F16D 65/092, F16D 55/225

(54) **ANORDNUNG EINES BELAGHALTEBÜGELS AM BREMSSATTEL EINER SCHEIBENBREMSE SOWIE BREMSBELAG**
ARRANGEMENT OF A PAD RETAINING CLIP ON THE BRAKE CALIPER OF A DISK BRAKE, AND BRAKE PAD
AGENCEMENT D'UN ÉTRIER DE SUPPORT DE GARNITURE SUR UN ÉTRIER DE FREIN À DISQUE ET GARNITURE DE FREIN

(30) Priorität: 17.09.2012 DE 102012108667
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: PESCHEL, Michael, 82296 Schöngeising (DE); ASEN, Alexander, 94428 Eichendorf (DE); STÖGER, Christian, 94474 Vilshofen (DE); KLINGNER, Matthias, 82272 Moorenweis (DE); BRANDL, Christian, 94447 Plattling (DE); WERTH, Alexander, 80999 München (DE); RGUICHI, Abdelaziz, 82140 Olching (DE)
(86) Internationale Anmeldenummer: PCT/EP2013/069120
(87) Internationale Veröffentlichungsnummer: WO 2014/041157

(56) Entgegenhaltungen:
- EP-A1- 2 184 506
- WO-A1-2007/051614
- DE-A1- 3 938 881
- DE-A1-102006 002 306
- DE-A1-102006 051 965

## Beschreibung

Die Erfindung betrifft eine Scheibenbremse nach dem Oberbegriff des Anspruchs 1 sowie einen Bremsbelag für eine Scheibenbremse nach dem Oberbegriff des Anspruchs 9.

Die Anordnung eines Belaghaltebügels am Bremssattel einer Scheibenbremse ist beispielsweise aus der DE 10 2006 039 298 B3 bekannt. Dabei dient der Belaghaltebügel der Vorspannung von im Bremssattel angeordneten Bremsbelägen, die jeweils eine an einer Belagträgerplatte befestigte Belaghaltefeder aufweisen, mittels derer, in Korrespondenz mit dem Belaghaltebügel, die Bremsbeläge unter Vorspannung im Bremssattel gehalten werden, um z.B. Klappergeräusche zu verhindern.

Gemäß der WO 2007/068464 A1 wird eine solche Belaghaltefeder mittels einer Haube an der Belagträgerplatte befestigt und zwar derart, dass die Belaghaltefeder in radialer Richtung bewegbar ist. Der Belaghaltebügel stützt sich dabei an der mit der Belaghaltefeder verbundenen Haube ab.

Die bislang bekannten Vorschläge zur Befestigung des Belaghaltebügels am Bremssattel sind jedoch nicht in der gewünschten Weise geeignet, den Forderungen nach einer einfachen Montage und Demontage der Bremsbeläge, insbesondere bei einem Bremsbelagwechsel zu entsprechen.

So wird beispielsweise in der DE 86 15 015 U1 vorgeschlagen, den Belaghaltebügel einerseits formschlüssig am Bremssattel zu halten und andererseits mit dem Bremssattel zu verschrauben. Naturgemäß ist diese Art der Befestigung des Belaghaltebügels nur mit einem erheblichen Aufwand möglich, sowohl in der Vorbereitung entsprechender Maßnahmen, wie das Einbringen einer Gewindebohrung in den Bremssattel, wie auch hinsichtlich der Montage bzw. Demontage. Dabei sind die beengten räumlichen Verhältnisse einer montierten Scheibenbremse zu bedenken, die die Montagearbeiten zusätzlich erschweren.

Aber auch die konstruktiven Lösungen, bei denen auf den Einsatz von Verbindungsmitteln verzichtet wird und die stattdessen andere, insbesondere Formschlusselemente vorschlagen, sind nicht geeignet, zu einer Optimierung der Montagearbeiten beizutragen.

In der WO 2007/051614 A1 ist eine Scheibenbremse offenbart, bei der Formschlusselemente der Belagträgerplatten der beiden Bremsbeläge in Fensteröffnungen des Belaghaltebügels eingreifen. Die Sicherung des Belaghaltebügels erfolgt durch ein Sicherungselement, das am Bremssattel gehalten ist.

Zur Sicherung des Belaghaltebügels ist in der DE 10 2006 02306 A1 eine mit dem Belaghaltebügel fest verbundene Blattfeder vorgesehen, die als Verschiebesicherung am Bremssattel anliegt.

In der DE 10 2006 051965 A1 schließlich ist eine Scheibenbremse thematisiert, bei der zur Montageerleichterung der Bremsbeläge diese und der Belaghaltebügel als Montagebaueinheit zusammengefasst sind und als Ganzes montierbar bzw. demontierbar sind.

Der Erfindung liegt die Aufgabe zugrunde, eine Scheibenbremse sowie einen Bremsbelag der gattungsgemäßen Art so weiterzuentwickeln, dass eine einfache und kostengünstige Montage bzw. Demontage von Bremsbelägen möglich ist und die Herstellungskosten der zur Befestigung des Belaghaltebügels erforderlichen Maßnahmen zu minimieren.

Diese Aufgabe wird durch eine Scheibenbremse mit den Merkmalen des Anspruchs 1, einen Belaghaltebügel mit den Merkmalen des Anspruchs 7, sowie einen Bremsbelag mit den Merkmalen des Anspruchs 9 gelöst.

Die neue Scheibenbremse bietet gegenüber einer solchen nach dem Stand der Technik erhebliche Vorteile, insbesondere hinsichtlich einer Kostenminimierung, die sich zum einen aus dem konstruktiv einfachen Aufbau des Belaghaltebügels und der damit einhergehenden preiswerten Herstellung ergibt und zum anderen aus der, gegenüber dem Stand der Technik wesentlich vereinfachten Handhabung bezüglich der Montage bzw. Demontage des Belaghaltebügels und damit der Bremsbeläge.

Dabei zeichnet sich die neue Scheibenbremse durch eine besondere Robustheit aus sowie durch eine zuverlässige Befestigung des Belaghaltebügels am Bremssattel, die auch bei größtmöglicher Beanspruchung im Fahrbetrieb des vorzugsweise Nutzfahrzeuges uneingeschränkt sicher ist.

Zur Realisierung des Formschlusses weist der Belaghaltebügel eine Fensteröffnung auf, in die ein Formschlusselement des Bremsbelages derart eingreift, dass der Belaghaltebügel verschiebegesichert ist.

Der Belaghaltebügel ist mit der Belaghaltefeder oder eine mit der Belaghaltefeder verbundene Haube, verrastet, wozu diese entsprechend angeformte Rastelemente aufweist.

Bei einem Verzicht auf die Belaghaltefeder, wie er ebenfalls aus dem Stand der Technik bekannt ist, aber auch bei einem Einsatz der Belaghaltefeder, kann das Formschlusselement an der Belagträgerplatte befestigt sein oder einstückig damit ausgebildet.

Nach einer vorteilhaften Weiterbildung der Erfindung sind am Bremssattel gleichfalls Formschlusselemente vorgesehen, in die der Belaghaltebügel in einer Endstellung eingreift, wobei diese Formschlusselemente in den gegenüberliegenden Randbereichen einer Montageöffnung des Bremssattels angeordnet sind, die der Belaghaltebügel überspannt. Damit wird eine zusätzliche Sicherung des Belaghaltebügels quasi in alle Richtungen erreicht.

Da der Bremssattel üblicherweise aus Gusseisen besteht, können die Formschlusselemente des Bremssattels mit angeformt sein, so dass dies praktisch kostenneutral erfolgt.

Eine kostenneutrale Herstellung des Belaghaltebügels ist ebenfalls möglich, da dieser als Blechformteil durch Stanzen hergestellt ist, ebenso wie die Belaghaltefeder oder die Haube, die bei einer Ausführungsvariante mit dem Belaghaltebügel korrespondierende Formschlusselemente aufweist.

Diese Formschlusselemente bestehen nach der Erfindung aus mindestens einer Rastzunge, die eine Fensteröffnung des Haltebügels durchtritt und an einer Wandung der Fensteröffnung derart anliegt, dass eine Verschiebung des Haltebügels in Achsrichtung ausgeschlossen ist.

Diese Rastzunge ist an die Belaghaltefeder, die als Blattfeder ausgebildet ist, oder an die Haube angeformt, was eine einfache und äußerst kostengünstige Herstellung ermöglicht. Eine solche Rastzunge kann auch an die Belagträgerplatte angesetzt sein oder einstückig mit dieser ausgebildet.

Bevorzugt sind zwei Rastzungen vorgesehen, die an den sich gegenüberliegenden Wandungen der Fensteröffnung in Längsachsrichtung des Haltebügels anliegen, wobei diese beiden Rastzungen parallel und abständig zueinander verlaufen und zum Einstecken bzw. zum Herausdrücken aus der Fensteröffnung elastisch verformbar sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 und 2: jeweils eine Anordnung eines Belaghaltebügels in unterschiedlichen Positionen, perspektivisch dargestellt
- Figur 3: einen Teilausschnitt der Anordnung in einer geschnittenen Seitenansicht gem. der Linie III-III in Figur 2
- Figuren 4 und 5: jeweils ein weiteres Ausführungsbeispiel der Erfindung, gleichfalls in einem Teilausschnitt, entsprechend der Darstellung in Figur 3

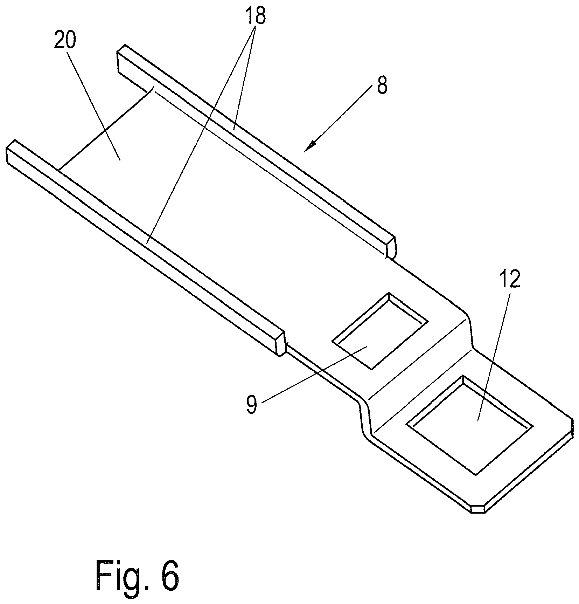

- Figur 6: einen Belaghaltebügel gemäß der Erfindung in einer perspektivischen Ansicht.

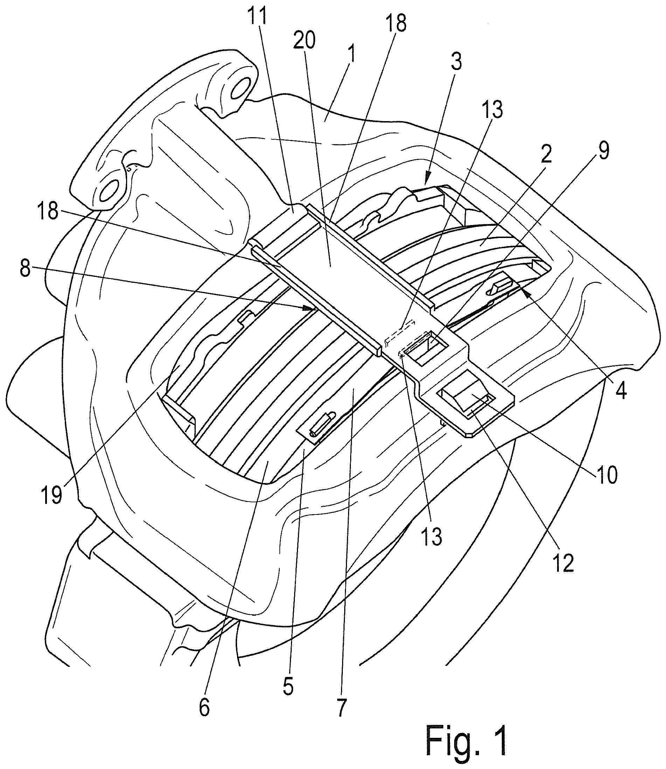

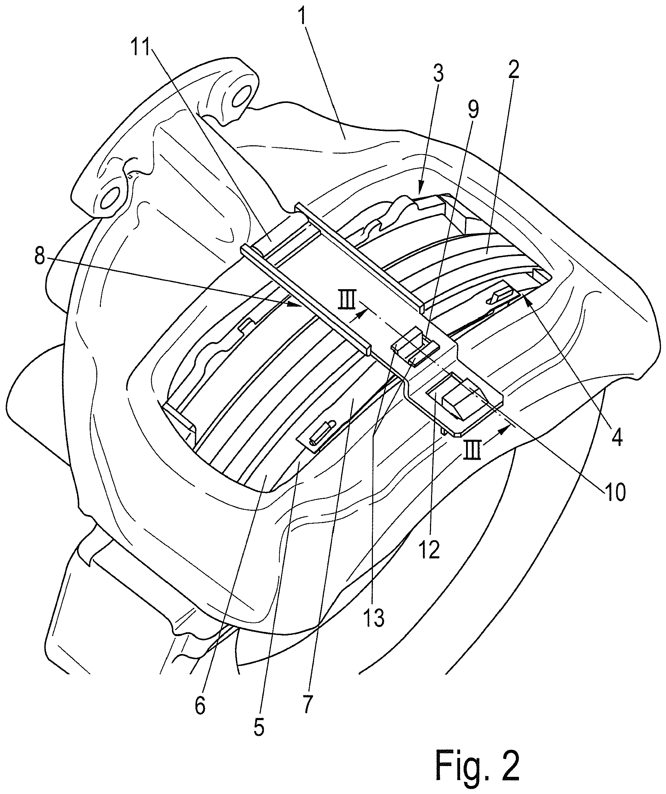

In den Figuren 1 und 2 ist jeweils eine Schiebesattel-Scheibenbremse für ein Nutzfahrzeug dargestellt, mit einem Bremssattel 1, an dem zwei Bremsbeläge 3, 4 angeordnet sind, die jeweils beidseitig eine Bremsscheibe 2 im Fall einer Bremsung kontaktieren, wobei jeder Bremsbelag 3, 4 eine Belagträgerplatte 5 sowie auf der der Bremsscheibe 2 zugewandten Seite einen mit der Belagträgerplatte 5 verbundenen Reibbelag 6 aufweist.

An jeder Belagträgerplatte 5 ist eine Belaghaltefeder 7 in Form einer Blattfeder befestigt, an denen sich ein Belaghaltebügel 8 abstützt, der eine Montageöffnung 19 des Bremssattels 1 überspannt und beidseitig am Rand der Montageöffnung 19 am Bremssattel 1 gehalten ist.

Der Bremsbelag 3 wird mittels einer nicht dargestellten Zuspanneinrichtung gegen die Bremsscheibe 2 gepresst, während der gegenüberliegende, reaktionsseitige Bremsbelag 4 an der Rückwand des Bremssattels 1 anliegt.

Zur Befestigung des Haltebügels 8 am Bremssattel 1 ist dem zuspannseitigen Bremsbelag 3 ein Halter 11 zugeordnet und auf der gegenüberliegenden Seite eine Rastnase 10 vorzugsweise an den aus Gusseisen bestehenden Bremssattel 1 angeformt.

Gemäß der Erfindung ist der Belaghaltebügel 8 durch Formschluss verschiebegesichert am Bremsbelag 4 befestigt.

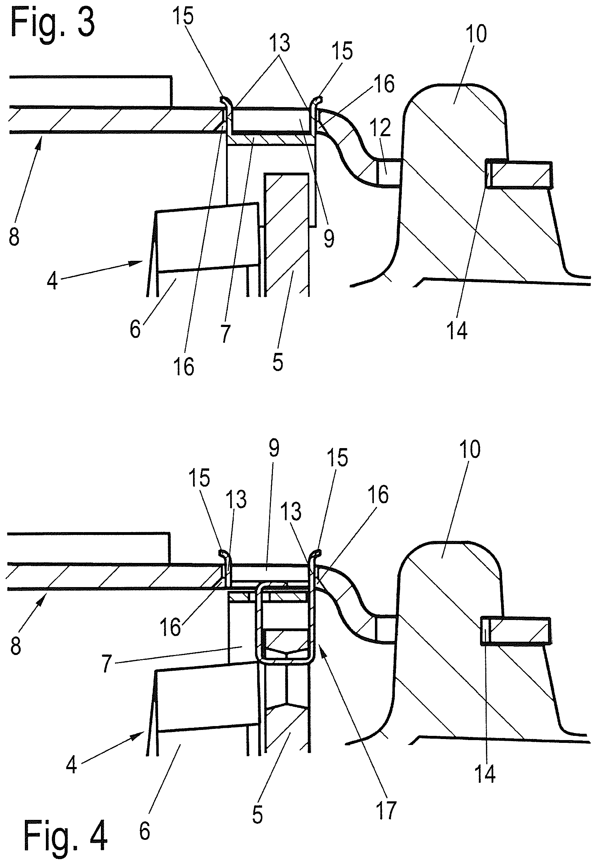

Hierzu weist der Belaghaltebügel 8 eine Fensteröffnung 9 auf, die in Funktionsstellung des Belaghaltebügels 8 von im Beispiel zwei parallel und abständig zueinander angeordneten Rastzungen 13 durchtreten ist, die an der Belaghaltefeder 7 oder einer Haube 17 angeordnet sind (Fig. 3 und 4), wobei sich die Rastzungen 13 quer zur Längsausdehnung des Belaghaltebügels 8 erstrecken.

In der Figur 1 ist der Beginn der Montage des Haltebügels 8 dargestellt, während die Figur 2 die montierte und damit verrastete Position wiedergibt.

Zur Montage des Haltebügels 8 wird dieser auf die Belaghaltefedern 7 aufgesetzt, von der aus sich die Rastzungen 13 nach oben erstrecken, und gegen die Kraft der Belaghaltefeder 7 nach unten gedrückt, wobei in dieser Position die angedeuteten Rastzungen 13 an der Unterseite des Haltebügels 8 anliegen. Dabei durchtritt der Rasthaken 10 einen Durchbruch 12 des Belaghaltebügels 8, während das gegenüberliegende Ende in Deckung mit einem nicht dargestellten Einführschlitz des Halters 11 steht.

Nach dem Niederdrücken der Belaghaltefeder 7 wird der Belaghaltebügel 8 in Richtung des Halters 11 verschoben, bis die Rastzungen 13 in den offenen Bereich der Fensteröffnung 9 gelangen und ein vorderseitiger Steg des Belaghaltebügels 8 in eine Hinterschneidung 14 der Rastnase 10 eintaucht.

Diese Endstellung ist in den Figuren 3 und 4 gezeigt, wobei die Figur 3 eine Ausführungsvariante wiedergibt, bei der die Rastzungen 15 in die im Bremsbelag 4 abgewandte Richtung abgewinkelt zur Belaghaltefeder 7 verlaufen und an ihrem freien Ende jeweils nach außen gerichtete Kröpfungen 15 aufweisen, die die zugeordneten Randbereiche der Fensteröffnung 9 überdecken. Damit ist der Belaghaltebügel 8 nach oben hin gesichert.

Zur einfacheren Einführung der Rastzungen 15 ist an den zugeordneten Wandungen der Fensteröffnung 9 auf der dem Bremsbelag 4 zugewandten Unterseite des Belaghaltebügels 8 jeweils eine Einlaufschräge 16 vorgesehen, durch die die Rastzungen 13 unter gegensinniger Verformung so weit zusammengedrückt werden, dass ein einfaches Durchtreten der Fensteröffnung 9 gewährleistet ist.

Prinzipiell reicht der Einsatz einer Rastzunge 13 aus, die dann auf der der Rastnase 10 gegenüberliegenden Seite der Belaghaltefeder 7 angeordnet ist, um so eine Verschiebung in Richtung der Rastnase 10 zu verhindern. Die Breite der Rastzungen 13 quer zur Längserstreckung des Belaghaltebügels 8 entspricht etwa der zugeordneten Breite der Fensteröffnung 9.

Bei dem in der Figur 4 gezeigten Beispiel sind die Rastzungen 13 Bestandteil der Haube 17 mit der die Belaghaltefeder 7 am Bremsbelag 4 gehalten ist, wobei die Haube 17 fest mit der Belaghaltefeder 7 verbunden ist.

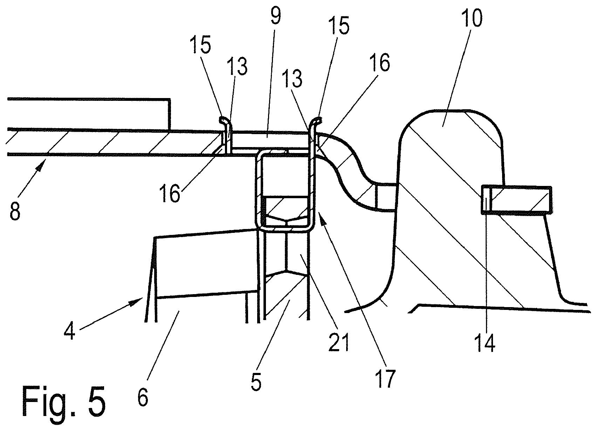

Bei dem in der Figur 5 gezeigten Beispiel bildet die Haube 17 das Formschlusselement, wozu sie in einem Schlitz 21 der Belagträgerplatte gehalten ist. In diesem Fall kann auf den Einsatz der Belaghaltefeder 7 zum Zweck der Befestigung des Formschlusselementes verzichtet werden. Im Übrigen entspricht die Haube 17 in ihrem Aufbau und in ihrer Konfiguration derjenigen nach der Figur 4.

Der Formschluss des Belaghaltebügels 8 mit der Belaghaltefeder 7 ist nur an dem reaktionsseitigen Bremsbelag 4 sinnvoll, da bei einer Schiebesattel-Scheibenbremse der gegenüberliegende, zuspannseitige Bremsbelag 3 verschiebbar ist, während der reaktionsseitige Bremsbelag 4 in seiner Position gegenüber dem Bremssattel 1 verharrt.

Zur Demontage der Bremsbeläge 3, 4, d.h., zum Lösen des Belaghaltebügels 8, ist lediglich die Belaghaltefeder 7 in Richtung des Bremsbelages 4 niederzudrücken, bis die Rastzungen 15 aus dem Anlagebereich mit der Fensteröffnung 9 gebracht sind, so dass der Belaghaltebügel 8 in Richtung der Rastnase 10 frei verschiebbar und abnehmbar ist.

Beidseitig weist der Belaghaltebügel 8 Rippen 18 auf, die auf der dem Durchbruch 12 gegenüberliegenden Endseite über eine Auflagefläche 20 im Sinne von Gabelzinken vorstehen und in diesem Bereich eine seitliche Begrenzung zur Halterung im Halter 11 bilden.

### Bezugszeichenliste

- 1: Bremssattel
- 2: Bremsscheibe
- 3: Bremsbelag
- 4: Bremsbelag
- 5: Belagträgerplatte
- 6: Reibbelag
- 7: Belaghaltefeder
- 8: Belaghaltebügel
- 9: Fensteröffnung
- 10: Rastnase
- 11: Halter
- 12: Durchbruch
- 13: Rastzunge
- 14: Hinterschneidung
- 15: Kröpfung
- 16: Einlaufschräge
- 17: Haube
- 18: Rippe
- 19: Montageöffnung
- 20: Auflagefläche
- 21: Schlitz

## Patentansprüche

1. Scheibenbremse mit einem am Bremssattel (1) der Scheibenbremse angeordneten Belaghaltebügel (8), wobei im Bremssattel (1) zwei beidseitig an eine Bremsscheibe (2) anpressbare, jeweils eine Belagträgerplatte (5) und einen daran befestigten Reibbelag (6) aufweisende Bremsbeläge angeordnet sind, an denen sich der am Bremssattel (1) gehaltene, eine Montageöffnung (19) überspannende Belaghaltebügel (8) abstützt, wobei der Belaghaltebügel (8) verschiebegesichert an einem Formschlusselement zumindest eines Bremsbelages (4) befestigt ist, wobei das Formschlusselement an einer Belaghaltefeder (7) des Bremsbelages oder einer mit der Belaghaltefeder (7) verbundenen Haube (17) oder der Belagträgerplatte (5) angeschlossen ist, **dadurch gekennzeichnet dass** das Formschlusselement mindestens eine Rastzunge (13) aufweist, die in eine Fensteröffnung (9) des Belaghaltebügels (8) eingreift und an einer Wandung der Fensteröffnung (9) anliegt.

2. Scheibenbremse nach Anspruch 1, **dadurch gekennzeichnet, dass** zwei parallel und abständig zueinander angeordnete Rastzungen (13) vorgesehen sind.

3. Scheibenbremse nach Anspruch 1 oder 2, **dadurch gekennzeichnet, dass** der Belaghaltebügel (8) mit einem Ende in einem Schlitz eines Halters (11) des Bremssattels (1) und mit seinem anderen Ende in einer Hinterschneidung (14) einer Rastnase (10) des Bremssattels (1) einliegt, wobei die Rastnase (10) einen Durchbruch (12) des Belaghaltebügels (8) durchtritt.

4. Scheibenbremse nach einem der vorhergehenden Ansprüche, **dadurch gekennzeichnet, dass** jede Rastzunge (13) auf ihrer der Belagträgerplatte (5) abgewandten Seite eine nach außen gerichtete Kröpfung (15) aufweist, die den oberen Randbereich der Fensteröffnung (9) überdeckt.

5. Scheibenbremse nach einem der vorhergehenden Ansprüche, **dadurch gekennzeichnet, dass** die Rastzunge (13) elastisch verformbar ist.

6. Scheibenbremse nach einem der vorhergehenden Ansprüche, **dadurch gekennzeichnet, dass** an der dem Bremsbelag (4) zugewandten Unterseite des Belaghaltebügels (8) im Randbereich der Fensteröffnung (9) eine Einlaufschräge (16) vorgesehen ist.

7. Belaghaltebügel für eine Scheibenbremse nach einem der Ansprüche 1 bis 6, wobei der Belaghaltebügel (8) an einem Bremssattel (1) zur Abstützung von Bremsbelägen (3, 4) festlegbar ist, und wobei der Belaghaltebügel (8) eine Fensteröffnung (9) sowie einen Durchbruch (12) aufweist, **dadurch gekennzeichnet, dass** die Fensteröffnung (9) zumindest einer, sich quer zur Längsausrichtung des Belaghaltebügels (8) erstreckenden Wandung eine Einlaufschräge (16) aufweist.

8. Belaghaltebügel nach Anspruch 7, **dadurch gekennzeichnet, dass** dieser an beiden Längsseiten jeweils eine Rippe (18) aufweist, die auf der dem Durchbruch (12) gegenüberliegenden Endseite über eine Auflagefläche (20) vorsteht.

9. Bremsbelag mit Bremsbelagfeder (7) für eine Scheibenbremse nach einem der Ansprüche 1 bis 6, mit einer Belagträgerplatte (5) und einem darauf befestigten Reibbelag (6), wobei an der Belagträgerplatte (5) oder an einer daran angeschlossenen Belaghaltefeder (7) oder einer an der Belaghaltefeder (7) befestigten Haube (17) ein Formschlusselement angeordnet ist, **dadurch gekennzeichnet, dass** das Formschlusselement mindestens eine Rastzunge (13) aufweist.

10. Bremsbelag nach Anspruch 9, **dadurch gekennzeichnet, dass** zwei parallel und abständig zueinander verlaufende Rastzungen (13) vorgesehen sind.

11. Bremsbelag nach Anspruch 9 oder 10, **dadurch gekennzeichnet, dass** die Rastzunge (13) quer zur Längserstreckung der Belagträgerplatte (5) elastisch verformbar ist.

12. Bremsbelag nach einem der Ansprüche 9-11, **dadurch gekennzeichnet, dass** die Rastzunge (13) auf ihrer nach außen gerichteten freien Randseite eine Kröpfung (15) aufweist.

## Claims

1. Disc brake with a pad retaining clip (8) located on the brake calliper (1) of a disc brake, wherein in the brake calliper (1) there are arranged two brake pads which can be pressed against a brake disc (2), each of which brake pads comprises a backing plate (5) and a friction lining (6) attached thereto, on which brake pads the pad retaining clip (8) held on the brake calliper (1) and spanning an assembly opening (19) is supported, wherein the pad retaining clip (8) is fastened to a positively locking element of at least one brake pad (4) such that it is secured against being displaced, wherein the positively locking element is connected to an anti-rattle spring (7) of the brake pad or to a cover (17) connected to the anti-rattle spring (7) or to the backing plate (5), **characterised in that** the positively locking element has at least one latching tongue (13) which engages with a window opening (9) of the pad retaining clip (8) and bears against a wall of the window opening (9).

2. Disc brake according to claim 1, **characterised in that** two latching tongues (13) are provided which are arranged parallel to and at a distance from one another.

3. Disc brake according to claim 1 or 2, **characterised in that** the pad retaining clip (8) lies with one end in a slot of a holder (11) of the brake calliper (1) and with its other end in an undercut (14) of a latching lug (10) of the brake calliper (1), the latching lug (10) passing through an aperture (12) of the pad retaining clip (8).

4. Disc brake according to any of the preceding claims, **characterised in that** on its side which faces away from the backing plate (5), each latching tongue (13) has an outwardly directed offset (15) which covers the upper edge region of the window opening (9).

5. Disc brake according to any of the preceding claims, **characterised in that** the latching tongue (13) can be deformed elastically.

6. Disc brake according to any of the preceding claims, **characterised in that** an entry bevel (16) is provided in the edge region of the window opening (9) on the underside of the pad retaining clip (8), which underside faces the brake pad (4).

7. Pad retaining clip for a disc brake according to any of claims 1 to 6, wherein the pad retaining clip (8) can be fixed to a brake calliper (1) for supporting brake pads (3, 4) and wherein the pad retaining clip (8) has a window opening (9) and an aperture (12), **characterised in that** the window opening (9) of at least one wall which extends transversely with respect to the longitudinal orientation of the pad retaining clip (8) has an entry bevel (16).

8. Pad retaining clip according to claim 7, **characterised in that** it has on each of its long sides a rib (18) which protrudes beyond a bearing face (20) on the end side which lies opposite the aperture (12).

9. Brake pad with an anti-rattle spring (7) for a disc brake according to any of claims 1 to 6, comprising a backing plate (5) and a friction lining (6) attached thereto, wherein a positively locking element is arranged on the backing plate (5) or on an anti-rattle spring (7) which is attached thereto, or on a cover (17) which is fastened to the pad retaining spring (7), **characterised in that** the positively locking element has at least one latching tongue (13).

10. Brake pad according to claim 9, **characterised in that** two latching tongues (13) are provided which run parallel to and at a distance from one another.

11. Brake pad according to claim 9 or 10, **characterised in that** the latching tongue (13) can be deformed elastically transversely with respect to the longitudinal extent of the backing plate (5).

12. Brake pad according to any of claims 9,to 11, **characterised in that** the latching tongue (13) has an offset (15) on its outwardly directed free edge side.

## Revendications

1. Frein à disque comportant un archet (8) de maintien de garniture disposé sur un étrier (1) du frein à disque, dans lequel, dans l'étrier (1) de frein, sont montées deux garnitures de frein, qui peuvent être pressées des deux côtés sur un disque (2) de frein, qui ont chacune une plaque (5) de porte-garniture et une garniture (6) de friction, qui y est fixée, et sur lesquelles s'appuie l'archet (8) de maintien de garniture, maintenu sur l'étrier (1) de frein et chevauchant une ouverture (19) de montage, dans lequel l'archet (8) de maintien de garniture est fixé, sans pouvoir se déplacer, sur un élément à complémentarité de forme d'au moins une garniture (4) de frein, dans lequel l'élément à complémentarité de forme est raccordé à un ressort (7) de porte-garniture de la garniture de frein ou à une calotte (17) reliée au ressort (7) de maintien de garniture ou à la plaque (5) de porte-garniture, **caractérisé en ce que** l'élément à complémentarité de forme a au moins une languette (13) d'encliquetage, qui pénètre dans une ouverture (9) en fenêtre de l'archet (8) de maintien de garniture et s'applique à une paroi de l'ouverture (9) en fenêtre.

2. Frein à disque suivant la revendication 1, **caractérisé en ce qu'**il est prévu deux languettes (13) d'encliquetage, parallèles et à distance l'une de l'autre.

3. Frein à disque suivant la revendication 1 ou 2, **caractérisé en ce que** l'archet (8) de maintien de garniture est introduit par une extrémité dans une fente d'un support (11) de l'étrier (1) de frein et, par son autre extrémité, dans une contre-dépouille (14) d'un bec (10) d'encliquetage, le bec (10) d'encliquetage passant dans une traversée (12) de l'archet (8) de maintien de garniture.

4. Frein à disque suivant l'une des revendications précédentes, **caractérisé en ce que** chaque languette (13) d'encliquetage a, du côté éloigné de sa plaque (5) de porte-garniture, un coude (15), qui est dirigé vers l'extérieur et qui recouvre la partie marginale supérieure de l'ouverture (9) en fenêtre.

5. Frein à disque suivant l'une des revendications précédentes, **caractérisé en ce que** la languette (13) d'encliquetage est déformable élastiquement.

6. Frein à disque suivant l'une des revendications précédentes, **caractérisé en ce que**, du côté inférieur, tourné vers la garniture (4) de frein, de l'archet (8) de maintien de garniture, est prévu, dans la partie de bord de l'ouverture (9) en fenêtre, un biseau (16) d'introduction.

7. Archet de maintien de garniture pour un disque de frein suivant l'une des revendications 1 à 6, dans lequel l'archet (8) de maintien de garniture peut être fixé à un étrier (1) de frein pour l'appui de garniture (3, 4) de frein et l'archet (8) de maintien de garniture ayant une ouverture (9) en fenêtre ainsi qu'une traversée (12), **caractérisé en ce que** l'ouverture (9) en fenêtre a au moins un biseau (16) d'introduction dans une paroi s'étendant transversalement à la direction longitudinale de l'archet (8) de maintien de garniture.

8. Archet de maintien de garniture suivant la revendication 7, **caractérisé en ce qu'**il a, sur les deux grands côtés, respectivement une nervure (18), qui dépasse d'une surface (20) d'application du côté de l'extrémité opposée à la traversée (12).

9. Garniture de frein, comprenant un ressort (7) de garniture de frein pour un frein à disque suivant l'une des revendications 1 à 5, comprenant une plaque (5) de porte-garniture et une garniture (6) de friction, qui y est fixée, dans laquelle, sur la plaque (5) de porte-garniture ou sur un ressort (7) de maintien des garnitures, qui y est raccordé, ou sur une calotte (17) fixée au ressort (7) de porte-garniture, est disposé un élément à complémentarité de forme, **caractérisée en ce que** l'élément à complémentarité de forme a au moins une languette (13) d'encliquetage.

10. Garniture de frein suivant la revendication 9, **caractérisée en ce qu'**il est prévu deux languettes (13) d'encliquetage, parallèles et à distance l'une de l'autre.

11. Garniture de frein suivant la revendication 9 ou 10, **caractérisée en ce que** la languette (13) d'encliquetage est déformable élastiquement, transversalement à l'étendue longitudinale de la plaque (5) de porte-garniture.

12. Garniture de frein suivant l'une des revendications 9 à 11, **caractérisé en ce que** la languette (13) d'encliquetage a un coude (15) du côté du bord libre dirigé vers l'extérieur.
